# EUROPÄISCHE PATENTANMELDUNG

(11) **EP 1 205 683 A2**
(43) Veröffentlichungstag der Anmeldung: **15.05.2002**
(21) Anmeldenummer: 01122830.1
(22) Anmeldetag: 22.09.2001
(51) Int. Cl.: F16D 65/12

(54) **Zusammengesetzte Fahrzeug-Bremsscheibe**

(30) Priorität: 10.11.2000 DE 10055768
(71) Anmelder: Bayerische Motoren Werke Aktiengesellschaft, 80809 München (DE)
(72) Erfinder: Honsberg, Wolfram, 84405 Dorfen (DE); Eichner, Georg, 85737 Ismaning (DE); Heidenthaler, Martin, 83417 Kirchanschoering (DE); Wanitschke, Raphael, 82140 Olching (DE)

(57) **Zusammenfassung**

Die Erfindung betrifft eine zusammengesetzte Fahrzeug-Bremsscheibe mit einem im wesentlichen rotationssymmetrischen Reibring (2), der über mehrere Anbindungsstellen (3,3a,3b,3c) starr oder schwimmend an einem im wesentlichen rotationssymmetrischen Nabenteil (1) befestigt ist. Erfindungsgemäß unterscheiden sich zumindest zwei in Umfangsrichtung aufeinanderfolgende Abstände zwischen jeweils einander benachbarten Anbindungsstellen voneinander, wobei die Anbindungsstellen in ihrer Gesamtheit betrachtet ungleichmäßig über dem Umfang verteilt angeordnet sein können. Bevorzugt ist eine ungerade Anzahl von Anbindungsstellen vorgesehen, die stark asymmetrisch über dem Umfang verteilt angeordnet sein können. Die Anzahl der Anbindungsstellen kann in der Größenordnung zwischen 5 und 15 liegen wobei eine geringere Anzahl je Umfangssegment hinsichtlich tieferfrequenter Geräuschabstrahlungen und eine höhere Anzahl hinsichtlich höherfrequenter Geräuschabstrahlungen vorgesehen ist.

## Beschreibung

Die Erfindung betrifft eine zusammengesetzte Fahrzeug-Bremsscheibe mit einem im wesentlichen rotationssymmetrischen Reibring, der über mehrere Anbindungsstellen starr oder schwimmend an einem im wesentlichen rotationssymmetrischen Nabenteil befestigt ist. Zum technischen Umfeld wird beispielshalber auf die DE 195 28 434 A1 verwiesen.

Insbesondere unter Leichtbau-Gesichtspunkten werden Bremsscheiben nicht mehr einteilig hergestellt, sondern aus einem Reibring sowie einem sog. Nabenteil, das bspw. wie an PKW-Bremsscheiben üblich topfförmig ausgebildet sein kann, zusammengesetzt. Lediglich ein Beispiel hierfür zeigt die o.g. Schrift, wobei üblicherweise nicht nur der Reibring sowie das Nabenteil im wesentlichen rotationssymmetrische Bauteile darstellen, sondern auch sog. Anbindungsstellen, über welche der Reibring am Nabenteil befestigt ist, symmetrisch bzw. gleichmäßig verteilt über dem Bremsscheiben-Umfang angeordnet sind. Die vorliegende Erfindung bezieht sich dabei auf die unterschiedlichsten Arten von Anbindungsstellen, d.h. die im folgenden geschilderte Problematik sowie die danach erläuterte Erfindung ist nicht auf spezielle Ausbildungen von Anbindungsstellen beschränkt. Es sollten lediglich mehrere diskrete Anbindungsstellen vorgesehen sein, die den Reibring bezüglich des Nabenteiles zumindest in Umfangsrichtung festlegen; insbesondere in Axialrichtung hingegen kann der Reibring durchaus schwimmend am Nabenteil befestigt sein. Lediglich beispielshalber seien hier für mögliche Ausbildungen der Anbindungsstellen stiftförmige oder schraubenförmige Verbindungselemente vorzugsweise in Axialrichtung oder Radialrichtung der Bremsscheibe ausgerichtet, genannt, daneben aber auch Verbindungen, die durch Umformen bspw. von Laschen oder dgl. hergestellt werden.

Ein grundsätzlich an Bremsen (zumindest während deren Entwicklung) immer wieder auftauchendes Problem ist das sog. Bremsen-Quietschverhalten, das u.a. maßgeblich durch die hohe Anzahl von Eigenfrequenzen und die Art der Eigenschwingformen des gesamten Fahrzeug-Bremssystems bestimmt wird. Ziel ist es daher, die Anregung der Eigenfrequenzen bzw. Eigenschwingformen der einzelnen Bremsscheiben-Bauteile und des Gesamtsystems so gering als möglich zu halten, um unerwünschte Geräuschabstrahlungen während eines Bremsvorganges zu vermeiden.

Grundsätzlich werden die für die Geräuschabstrahlung maßgeblichen "Lautsprecher" in einem Fzg.-Bremssystem durch die Bremsscheiben gebildet. Durch ihre rotationssymmetrische Konstruktion bilden sich hier die Eigenschwingformen nahezu gleichmäßig über den äußeren Umfang aus. Bei Reibringen mit schwimmender Lagerung kommen vergleichbare Verhältnisse auch für den teilweise freien Reibring-Innenrand in Betracht, was die Möglichkeiten der Geräuschbildung nachteiligerweise noch verstärkt.

Aufzuzeigen, wie Bremsenquietschen bzw. unerwünschte Geräuschabstrahlungen an einer Bremsscheibe nach dem Oberbegriff des Anspruchs 1 wirkungsvoll verhindert bzw. zumindest so gering als möglich gehalten werden können, ist Aufgabe der vorliegenden Erfindung.
Die Lösung dieser Aufgabe ist dadurch gekennzeichnet, dass sich zumindest zwei in Umfangsrichtung aufeinanderfolgende Abstände zwischen jeweils einander benachbarten Anbindungsstellen voneinander unterscheiden. Vorteilhafte Weiterbildungen sind Inhalt der Unteransprüche.

Es wurde erkannt, dass die systembedingt vorhandenen Eigenschwingformen einer Bremsscheibe durch gezielte Anordnung der Anbindungsstellen in ihrer Ausbildung gestört werden können, d.h. dass die Anbindungsstellen sog. Störstellen oder eine Erschwernis hinsichtlich eines Schwingungsaufbaus in der Bremsscheibe bilden. Da sich die Eigenschwingformen der Scheibe über deren Umfang betrachtet praktisch nur gleichmäßig ausbilden können, können durch eine ungleichmäßige Umfangs-Verteilung der besagten Anbindungsstellen zwischen Reibring und Nabenteil kritische Eigenschwingformen bzw. Eigenfrequenzen der zusammengesetzten Bremsscheibe sogar eliminiert werden. Dabei kann es ausreichend sein, wenn die ungleichmäßige Verteilung der Anbindungsstellen in Bremsscheiben-Umfangsrichtung dadurch geschaffen wird, dass lediglich bei drei hintereinander folgenden Anbindungsstellen die Abstände zwischen jeweils zwei benachbarten Anbindungsstellen unterschiedlich sind, d.h. bspw. dass die ersten und zweite Anbindungsstelle einen Sektorwinkel von 20° einschließen und die zweite und dritte Anbindungsstelle einen Sektorwinkel von bspw. 35°. Es ist aber auch möglich, sämtliche Anbindungsstellen in ihrer Gesamtheit ungleichmäßig in Umfangsrichtung verteilt anzuordnen.

Besonders vorteilhaft ist es dabei, wenn die Gesamtzahl der Anbindungsstellen ungerade ist, da sich die Scheiben-Eigenschwingungen nur geradzahlig ausbilden können. Dabei entscheidet der absolute Betrag des Abstands zwischen den Anbindungspunkten und die Anzahl der Anbindungspunkte über den Frequenzbereich, der damit beeinflusst werden kann. So ist eine Scheibenkonstruktion mit insgesamt fünf Anbindungsstellen schon bei deutlich niedrigerer Frequenz in ihrem Schwingverhalten gestört, als eine solche mit bspw. neun Anbindungsstellen. Allgemein kann eine geringere Anzahl von Anbindungsstellen je Umfangssegment somit hinsichtlich tieferfrequenter Geräuschabstrahlungen und eine höhere Anzahl hinsichtlich höherfrequenter Geräuschabstrahlungen vorgesehen sein.

Ein Ausführungsbeispiel der Erfindung ist in der beigefügten Prinzip-Seitenansicht stark vereinfacht dargestellt und wird im folgenden kurz erläutert. Die gezeigte Fahrzeug-Bremsscheibe ist aus einem sog. Nabenteil 1 sowie einem Reibring 2 zusammengesetzt, wobei auf letzteren wie üblich nicht gezeigte Bremsbeläge pressend einwirken können, während das Nabenteil 1 insbesondere an einem Rad bspw. eines PKW's oder Motorrads geeignet befestigt ist. Miteinander verbunden sind der Reibring 2 und das Nabenteil 1 über mehrere, hier lediglich abstrakt dargestellte Anbindungsstellen 3, die - wie eingangs ausgeführt wurde - verschiedenartigst ausgebildet sein können. Wie ersichtlich sind diese Anbindungsstellen 3 - abweichend vom bekannten Stand der Technik - in ihrer Gesamtheit relativ ungleichmäßig über dem Umfang bzw. in Umfangsrichtung verteilt angeordnet. Insbesondere ist nicht nur eine ungerade Anzahl (nämlich die Zahl 11) von Anbindungsstellen vorgesehen, sondern es unterscheiden sich auch die in Umfangsrichtung aufeinanderfolgenden Abstände x und y der jeweils einander benachbarten Anbindungsstellen 3a und 3b bzw. 3b und 3c betragsmäßig voneinander. Hierdurch werden die bereits beschriebenen Effekte erzielt, d.h. kritische Eigenschwingformen der Bremsscheibe können hierdurch eliminiert werden.

Abweichend vom gezeigten Ausführungsbeispiel kann die ungleichmäßige Verteilung der Anbindungsstellen 3 über dem Außen-Umfang des Nabenteiles 1 bzw. über dem Innen-Umfang des Reibringes 2 selbstverständlich noch deutlich stärker, d.h. ungleichmäßiger ausfallen. So kann für diverse Anwendungsfälle bspw. eine stark asymmetrische Anordnung der Anbindungsstellen 3 vorgesehen sein, bspw. derart, dass man sich die Bremsscheibe in zwei Sektoren von jeweils 180° unterteilt vorstellt, und dass in einem Sektor bspw. lediglich drei Anbindungsstellen vorgesehen sind, während sich im anderen Sektor derer zwölf befinden. Im übrigen liegt eine bevorzugte Anzahl von sog. Anbindungsstellen 3 in der Größenordnung zwischen fünf und fünfzehn, jedoch ist diese Zahlen-Angabe stark von der jeweiligen Ausbildung der Anbindungsstellen abhängig.

Im übrigen lässt sich auch durch eine variable in Radialrichtung gemessene Breite des Reibringes 2 über dessen Umfang eine zusätzliche Störung der rotationssymmetrischen Gestaltung einführen, so dass hierdurch eine zusätzliche Verlagerung des Eigenschwingverhaltens der Bremsscheibe erzielbar ist.

Ferner können dann, wenn ein optisch gleichmäßiges Erscheinungsbild der Bremsscheibe mit sichtbaren Anbindungsstellen erwünscht ist, neben den funktional wirksamen (und dabei ungleichmäßig über dem Umfang verteilt angeordneten) Anbindungsstellen zusätzlich optisch wirkende, dabei jedoch funktional jedoch unwirksame Anbindungsstellen vorgesehen und derart angeordnet sein, dass sämtliche Anbindungsstellen in ihrer Gesamtheit über dem Umfang gleichmäßig verteilt angeordnet sind.

Ausdrücklich sei noch darauf hingewiesen, dass eine Vielzahl weiterer Details durchaus abweichend von obigen Erläuterungen gestaltet sein kann, ohne den Inhalt der Patentansprüche zu verlassen. Stets können mit den erfindungswesentlichen Merkmalen Bremsengeräusche bei einer Bremsenbetätigung vermieden oder zumindest deutlich reduziert werden. Ursächlich hierfür ist, dass die Eigenschwingformen einer erfindungsgemäßen Bremsscheibe je nach Lage des Problems gezielt mit den genannten Stellgrößen in ihrer Ausbildung gestört werden können. Dabei stellt sich vorteilhafterweise mit diesen Merkmalen auch eine inhomogene Wärmeausdehnung der Bremsscheibe - hervorgerufen durch Wärmeeintrag bei einem Bremsvorgang - ein, so dass auch die dem Fachmann bekannte Problematik des Bremsen-Rubbelns reduziert werden kann.

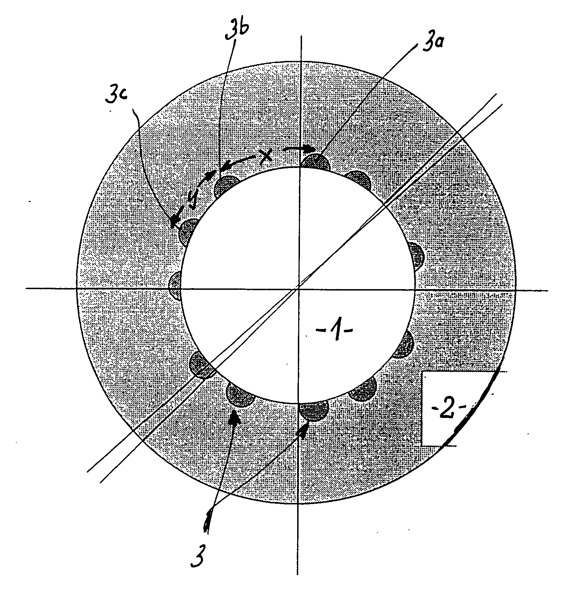

## Patentansprüche

1. Zusammengesetzte Fahrzeug-Bremsscheibe mit einem im wesentlichen rotationssymmetrischen Reibring (2), der über mehrere Anbindungsstellen (3) starr oder schwimmend an einem im wesentlichen rotationssymmetrischen Nabenteil (1) befestigt ist,
**dadurch gekennzeichnet, dass** sich zumindest zwei in Umfangsrichtung aufeinanderfolgende Abstände (x, y) zwischen jeweils einander benachbarten Anbindungsstellen (3a, 3b, 3c) voneinander unterscheiden.

2. Bremsscheibe nach Anspruch 1,
**dadurch gekennzeichnet, dass** die Anbindungsstellen (3) in ihrer Gesamtheit betrachtet ungleichmäßig über dem Umfang verteilt angeordnet sind.

3. Bremsscheibe nach Anspruch 1 oder 2,
**dadurch gekennzeichnet, dass** eine ungerade Anzahl von Anbindungsstellen (3) vorgesehen ist.

4. Bremsscheibe nach einem der vorangegangenen Ansprüche,
**dadurch gekennzeichnet, dass** die Anbindungsstellen stark asymmetrisch über dem Umfang verteilt angeordnet sind.

5. Bremsscheibe nach einem der vorangegangenen Ansprüche,
**dadurch gekennzeichnet, dass** neben den funktional wirksamen Anbindungsstellen (3) zusätzlich optisch wirkende, funktional jedoch unwirksame Anbindungsstellen vorgesehen sind, und dass sämtliche Anbindungsstellen in ihrer Gesamtheit über dem Umfang gleichmäßig verteilt angeordnet sind.

6. Bremsscheibe nach einem der vorangegangenen Ansprüche,
wobei die Anzahl der Anbindungsstellen (3) in der Größenordnung zwischen 5 und 15 liegt und eine geringere Anzahl je Umfangssegment hinsichtlich tieferfrequenter Geräuschabstrahlungen und eine höhere Anzahl hinsichtlich höherfrequenter Geräuschabstrahlungen vorgesehen ist.
